(19) Europäisches Patentamt
European Patent Office
Office européen des brevets

(11) EP 4 722 767 A1

(12) EUROPEAN PATENT APPLICATION

(43) Date of publication:
**08.04.2026 Bulletin 2026/15**

(21) Application number: **24204679.5**

(22) Date of filing: **04.10.2024**

(51) International Patent Classification (IPC):
***G01V 8/20*** *(2006.01)*

(52) Cooperative Patent Classification (CPC):
**G01V 8/20**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **CAME S.p.A.**
**31030 Dosson di Casier (TV) (IT)**

(72) Inventors:
- **MILICI, Antonio**
  **33053 Latisana (IT)**
- **LAZZARINI, Diego**
  **35035 Mestrino (IT)**

(74) Representative: **Savi, Massimiliano et al**
**Notarbartolo & Gervasi S.p.A.**
**Viale Achille Papa, 30**
**20149 Milano (IT)**

(54) **COMMUNICATION METHOD AND SYSTEM FOR PHOTOELECTRIC SENSORS**

(57) An optoelectronic sensor which uses a series of transmitters to emit light signals in a monitoring area and at least one receiver to receive them. A control device analyses the received signals and generates an alarm when it detects the presence of an item by interrupting the light signal. This system adopts an optical medium access method based on optical CDMA (O-CDMA), using spread spectrum techniques to ensure an efficient communication between transmitters and receivers. Each pair of photocells is associated with an optical orthogonal code (OOC), designed to minimize interferences with other simultaneous signals. By virtue of the O-CDMA method, the system is capable of identifying the position of the transmitted code and the correct synchronism, even without an explicit synchronization signal, thus improving the reliability of the detection.

10
10
10
10
10
10
10
10
20
20
20
20
20
20
20
20

Fig. 1



Processed by Luminess, 75001 PARIS (FR)

## Description

FIELD OF THE INVENTION

The invention belongs to the field of optoelectronic sensors. In particular, it relates to a system - and a corresponding method - comprising a plurality of photo emitters adapted to emit light signals in a given area; at least one photo receiver for receiving the light signals emitted by the photo emitters and emitting a signal relating to the outcome of the reception, and a control device for processing the reception of the light signals and generating detection or alarm signals when the presence of an item is detected in the monitored area, based on the signals exiting the photo receiver.

BACKGROUND ART

Photocell systems comprising pairs of photo transmitters and photo receivers are used, for example, in control systems for the automatic opening of doors and gates to determine the presence of obstacles, people or items, in the area affected by the opening of the gate.

The systems generally used for this type of applications comprise a plurality of photoelectric sensors, also called photocells, comprising photoemitting transmitters adapted to emit sequences of light pulses which are detected by a threshold value detector. The reception of the light signal determines the possible presence of obstacles along the path of the emitted light beam. If an item enters the area monitored by the photocell and the light path between the light emitter and the light receiver is interrupted, an item detection signal is generated which may, for example, activate an alarm signal.

Photocells are often installed so that multiple transmitters hit multiple receivers with the beam thereof, the beam emitted by the transmitters having an opening angle which is usually around 5°-10°.

To correctly discriminate and identify overlapping optical beams, multiplexing techniques of the Time Division Multiple Access type (TDMA) are used, in which the sharing of the transmission channel is achieved by dividing the access time to the channel itself. In the case of photocells installed to monitor a sensitive area, for example, the movement area of a gate, the receiver/transmitter pairs of the system are associated with an identifier, for example, an integer numeric index, and, by applying the TDMA multiplexing technique, each of the transmitters of the system is guided to transmit the light beam thereof in a specific time interval, determined based on the numerical index of the pair. In fact, according to the TDMA technique, for each receiver of the system to know when to receive the beam transmitted by the corresponding transmitter, it is necessary to establish a synchronism between the receivers and the transmitters, or at least between the transmitters of the system. This synchronism is established by means of a signal sent by means of a wired connection to all the transmitters of the system. This signal will give the transmission time to each transmitter and will prevent the different transmission times from overlapping. In the time interval thereof, each transmitter is guided to send a sequence of light pulses, for example amplitude-modulated pulses, which will reproduce a code representing the identifier of the transmitter.

Conventional systems using time division multiple access techniques or TDMA show issues related to some of the aspects described above:

- The need to have physical wiring connecting the transmitters of the system;
- The vulnerability to optical or electrical interference which affects the transmitters during the transmission step within the time interval thereof to the point of destroying the transmitted information. This vulnerability requires the introduction of redundancy in the information sent by the transmitters, so as to correct any possible errors due to the aforesaid interference.

The need to establish a fixed period comprising the time intervals of each receiver of the system, a fixed period which increases with the number of photocells installed.

Therefore, the need for photocell systems which may overcome the drawbacks of the current technique is clear.

SUMMARY OF THE INVENTION

The device according to the present description achieves the object by means of an optoelectronic sensor comprising a plurality of transmitters configured to emit light signals in a monitoring area, at least one receiver configured to receive the light signals emitted by the emitters, comprising a control device adapted to analyze the received light signals and to generate an alarm signal in the event of a detection, by the at least one receiver, of the presence of an item in the monitored area, by identifying the interruption of the emitted (and received) light signal, in which said control device implements a method for accessing the optical medium by optical Code Division Multiple Access or optical CDMA (O-CDMA).

According to this method, which is based on transmission techniques of the spread-spectrum type, each pair of photocells having the same identification index is associated with a specific code, established so as to generate the minimum interference with other codes transmitted simultaneously and asynchronously. This code is a code of the Optical Orthogonal Code or OOC type.

The implementation of the O-CDMA method allows the receiver or receivers of the optoelectronic sensor to identify the position of the code transmitted by the corresponding transmitter and to identify the correct synchronism even in the absence of a synchronization signal.

Furthermore, as the number of transmitters transmitting simultaneously increases, there is no corresponding increase in reception time, but only an increase in the so-called Multi Access Interference (MAI), which however remains at an easily manageable level in the case where the number of simultaneous transmitters is limited.

Consequently, the drawbacks described above, related to the conventional systems which use transmission techniques of the TDMA type, are overcome, since there is no longer any need to use a synchronization signal between the transmitters of the system, nor between the receivers and the transmitters; robustness against optical interference, due to the presence of other transmitters in the system, and also to the presence of different optical sources nearby (for example, photocells using different transmission techniques) is significantly improved; robustness against interference caused by conducted or radiated electrical disturbances affecting the receiver is also significantly improved; the time for the identification, by the receiver, of the light beam transmitted by the transmitters is significantly reduced and becomes independent of the number of transmitter/receiver pairs simultaneously active.

BRIEF DESCRIPTION OF THE FIGURES

Further objects, features and advantages of the present invention will be more apparent from the following detailed description provided by way of non-limiting example and illustrated in the accompanying figures, in which:

Figure 1 shows a functional diagram of an example of the system according to the present description, applied to the field of obstacle detection in the opening area of an automatic gate;
Figure 2 shows a functional block diagram of the system according to the present description;
Figure 3 shows an example of transmission timings relating to a preferred embodiment of the optoelectronic sensor according to the present description;
Figure 4 shows the relationship between the digital signal encoded by the transmitter and the signal actually received by the receiver;
Figure 5 shows an example of reconstruction of the sequence of bits corresponding to the signals received by the receiver, to be subsequently decoded;
Figure 6 shows a first example of sampling of the sequence of bits corresponding to the signals received by the receiver, to be subsequently decoded, in which the guard time $T_g$ is highlighted;
Figure 7 shows a second example of sampling of the sequence of bits corresponding to the signals received by the receiver, to be subsequently decoded, in which the guard time $T_g$ is highlighted;
Figure 8 shows a third example of sampling of the sequence of bits corresponding to the signals received by the receiver, to be subsequently decoded, in which the guard time $T_g$ is highlighted;
Figure 9 shows an example of a pseudo-correlation calculation by the O-CDMA decoding module according to a preferred embodiment of the invention, and
Figure 10 shows an example of an orthogonal optical code or OOC in which the number of codewords is 8 and the length of the codewords is 78 bits.

The following description of exemplary embodiments relates to the accompanying drawings. The same reference numerals in different drawings identify the same elements or similar elements. The following detailed description does not limit the invention. The scope of the invention is defined by the accompanying claims.

DETAILED DESCRIPTION OF THE INVENTION

In data transmission systems, the Code Division Multiple Access (CDMA) method is used in various telecommunication fields such as, for example, 3G/4G, OFDM, etc. as an alternative to the conventional Time Division Multiple Access (TDMA) or Frequency Division Multiple Access (FDMA) methods.

The main feature of the CDMA technique is the flexibility thereof, based on the fact that the number of users, i.e., the number of devices which access the medium, is not predetermined, but depends on the transmission speed (Bitrate) and on the level of multi-access interference, the interference due to the presence and number of other users of the medium.

Furthermore, the CDMA technique has the feature of not needing a synchronization signal, i.e., the transmitters do not need to be synchronized to be correctly decoded by the receivers.

It is therefore the object of the present description an improved optoelectronic sensor which implements an optical medium access method of the optical Code Division Multiple Access type (O-CDMA) and ensures an optimal signal-to-noise ratio of the individual light beams of a photoelectric barrier so as to create a simple structure having the maximum possible range.

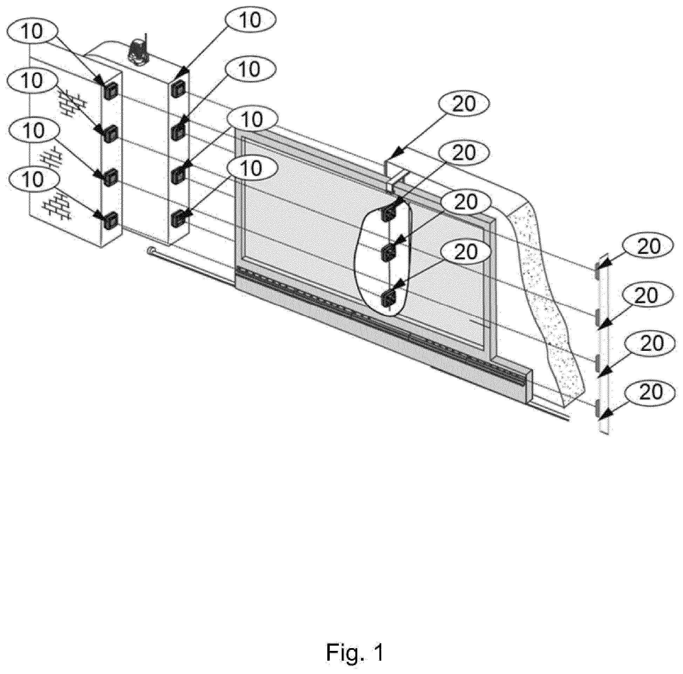

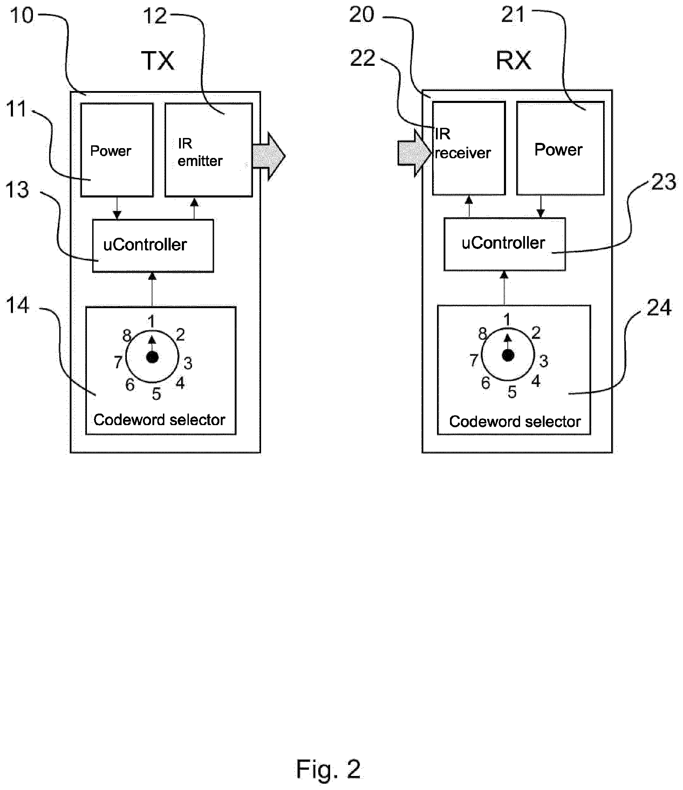

With reference to the accompanying Figures 1 and 2, the optoelectronic sensor according to the present invention comprises a plurality of light beam transmitters 10 and at least one receiver 20 of said light beams. Figure 1, in particular, shows a preferred embodiment of the optoelectronic sensor which is the object of the present description comprising a plurality of light beam transmitters 10 and a plurality of receivers 20 of said light beams.

In one embodiment, each of said transmitters 10 comprises a first power supply module 11, a transmission module 12 and a first control device 13, associated with a first codeword selection module 14, and configured to guide the transmission module 12 to emit a sequence of light signals, selectable by means of the codeword selection module 14, in the monitoring area.

Correspondingly, said at least one receiver 20 comprises a second power supply module 21, a reception module 22 and a second control device 23, associated with a second codeword selection module 24 and configured to read and process the detections of said reception module 22, so as to recognize a specific signature, represented by a specific codeword, selected by means of said codeword selection module 24, and therefore generate an alarm signal in the event that an obstacle is detected in the monitoring area.

In a preferred embodiment, the optoelectronic sensor according to the present description is configured so as to assign to each transmitter 10 a sequence of bits (signature), represented by said codeword . Each codeword consists of bits, which in this context are called chips. A chip with value "1" corresponds to the transmission of a light pulse, a chip with value "0" indicates no transmission. The number of bits with value "1" in each codeword is called "weight" of the code.

When all users transmit on the optical channel, it is intended as superposition of the chip sequences; the result is a signal obtained by the sum of the different light signals.

Since these are digital signals, the superposition of the transmitted signals is such that:

$$0 + 1 = 1 + 0 = 1 + 1 = 1;\ 0 + 0 = 0.$$

The codes used contain codewords which minimize multi-access interference and are called Optical Orthogonal Codes (OOCs). OOCs are constructed so that the autocorrelation is minimal for each shifted version of the codewords, and maximum only when the code coincides exactly with itself. OOCs are defined by the number of chips for each codeword, n, by the weight (i.e. the number of chips equal to 1) of the codeword, w, by the maximum values of the autocorrelation (for shifted versions of the same codeword) and of the cross-correlation.

The choice of a certain OOC code is therefore based on autocorrelation properties and cross-correlation properties of the code itself. Once the desired autocorrelation and cross-correlation properties have been selected, OOC codes may be constructed according to various known techniques.

Combinatorial methods (based on coding theory) or algebraic methods (for example, the methods indicated as Difference Set and Projective Geometry), or iterative methods may be used; in particular, algebraic methods allow to generate codes with orthogonality properties (autocorrelation and cross-correlation) that are adequate for the purpose of application of the present description.

According to a preferred embodiment, a specific signature is assigned to each pair of photocells, or a specific codeword is assigned to the transmitter, which is the signature that the receiver, once it has received the transmitted codeword, shall be capable of recognizing. Each photocell (each transmitter/receiver pair), for example the photocell i, is associated with a code of the OOC codeset. The selection of the code is based on autocorrelation and cross-correlation properties of the code itself.

An example of a selected code may be the following, obtained by means of the so-called Difference Set method, in which the number of codewords is 8, the length of the codewords is 78 bits, the weight of the code is 4; each codeword is represented by an array of integers indicating the positions of the bits set to 1 in the codeword itself:

[0,1,3,8], → codeword c_0
[0,4,13,19], → codeword c_1
[0,3,22,28], → codeword c_2
[0,9,14,27], → codeword c_3
[0,7,26,28], → codeword c_4
[0,9,14,25], → codeword c_5
[0,15,23,28], → codeword c_6
[0,17,20,27] → codeword c_7

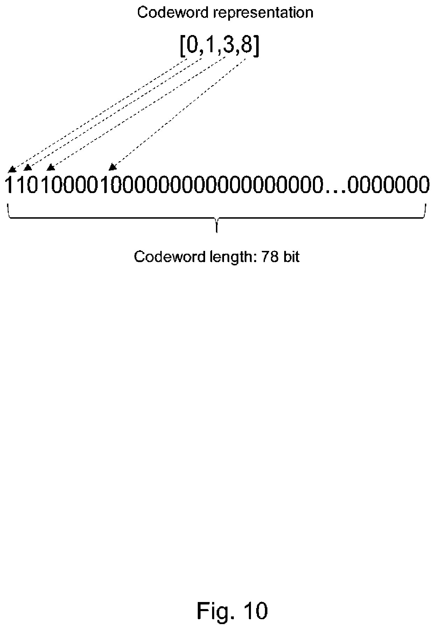

in which, by way of example, the codeword c_0 is shown in Figure 10.

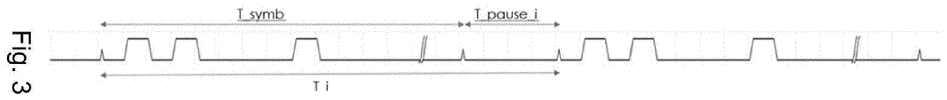

With reference to the accompanying Figure 3, the codeword corresponding to said symbol of the OOC-codeset is continuously transmitted by one of the transmitters 10 of the optoelectronic sensor, for example the transmitter *n*, with a period *T_i* that consists of a fixed part, the symbol time *T_symb* and a pause which depends on the index of the transmitter, *T_pause_i*:

$$T_i = T_symb + T_pause_i.$$

The chip time (*T_chip*) is defined as the duration of the transmission of the single bit of the codeword, bit which is indicated as *chip,* the symbol time *T_symb* is equal to the *chip time* multiplied by the length of the codeword, n:

$$T_symb = n * T_chip.$$

The receiver 20, decoding the codeword associated with the specific receiver / transmitter pair or with the specific photocell, recognizes the presence of the beam. If the receiver 20 fails to decode a codeword for a time greater than *T_i,* the beam would be considered interrupted or absent and a signal to such effect would be processed by the control device 23 of the receiver 20 to generate a signal adapted to generate an alarm or initiate a safety procedure following the identification of an obstacle within the monitored area.

Advantageously, the time interval *T_pause_i* depends on the transmitter index and varies in a set of times which will be multiples of the time *T_chip*, according to a prime multiplier of this set:

$$tx_delays_array = np.array\ ([1,3,5,7,11,13,17,19])$$

This allows that, in the event of superposition between the codes of the transmitters such to reproduce an existing code by multi-access interference, the latter may not be presented at the subsequent period *T_i*, such period being different for each transmitter.

The optical signal received by the at least one receiver 20 of the optoelectronic sensor according to the present description is converted by the receiver 20 into an electrical signal which is filtered, amplified and subsequently processed by said second control device 23.

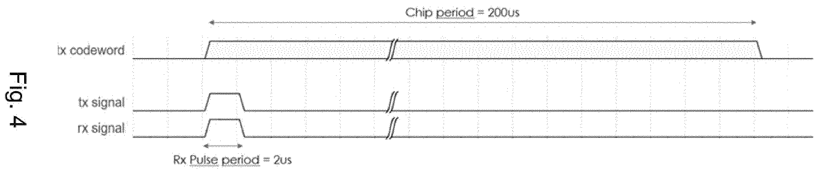

In a preferred embodiment, the pulses received by the microcontroller, corresponding to the bits sent by the transmitter and received by the receiver, have a duration of approximately 2us. The accompanying Figure 4 shows the digital signal encoded by the transmitter with respect to the signal received by the receiver.

Preferably, said second control device 23 of the receiver 20 of the optoelectronic sensor according to the present description is configured to comprise the following modules:

a digital channel reconstruction module (also indicated with the term channel window), adapted to perform the digital reconstruction of the sequence of bits sent on the physical channel, by threshold quantization and sampling, from the physical signal received by the microcontroller;

a decoding module, adapted to implement an OOC decoder according to the aforesaid O-CDMA technique to process the sequence of bits of the reconstructed channel, manage the decoded symbol and determine the possible absence of the optical beam, and

an adaptive synchronization module, adapted to maintain the synchronization of the time base of the receiver with respect to that of the transmitter, by means of the analysis of the arrival times of the codewords transmitted on the digital channel.

Said digital channel reconstruction, decoding and adaptive synchronization modules are preferably implemented by means of the firmware of one or more processors included in said control device 23.

The digital channel reconstruction module performs sampling to reconstruct, from the received signal, the sequence of bits, at chip time *T_chip*, to be subsequently supplied to the OOC decoder. The sampling period will be equal to the chip time *T_chip.*

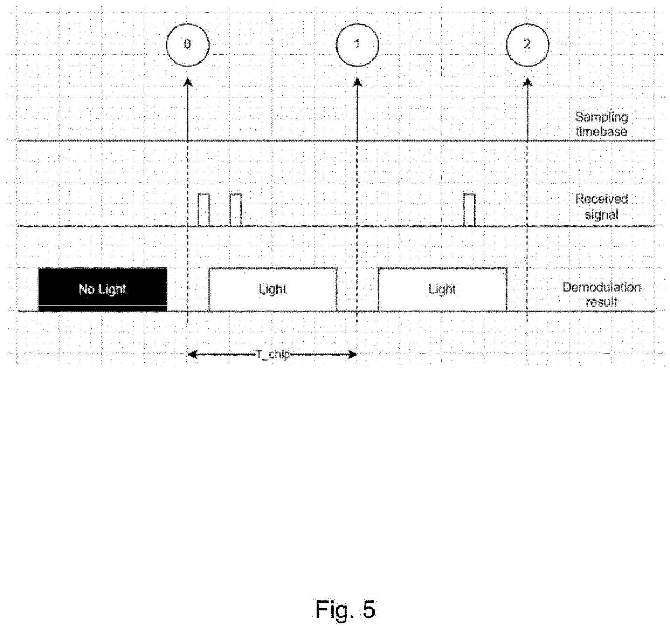

With reference to the accompanying Figure 5, at each of the sampling instants, the transmitted bits are determined based on the number of rising edges of the pulses which are identified in the previous period. In Figure 5, at point 0, no pulses were detected in the previous period, therefore the detected bit is "0"; at point 1, 2 pulses were detected in the previous period, therefore the detected bit is "1"; at point 2, 1 pulse was detected in the previous period, therefore the detected bit is "1".

This reconstruction system shall also take into account the possible drift between the transmitter and receiver time bases and the possible jitters of the pulses arriving at the receiver.

In order to mitigate or eliminate, within defined limits, the effect of drift and jitter, it is necessary to introduce a guard time around the sampling point, within which the pulse must be considered present both to the right and to the left of the sampling instant.

The guard time $T_g$ is linked to the maximum jitter which one is willing to accept, or to the maximum acceptable speed by which the two time bases deviate from each other.

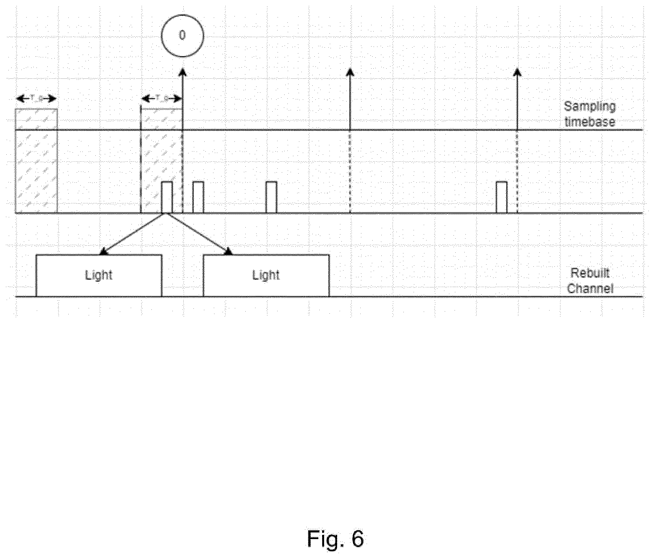

With reference to the accompanying Figure 6, in a preferred embodiment, at the sampling instant (0) it is checked whether the distance of the rising edges of the received pulses falls within the guard periods $T_g$. If so, a bit of value 1 is reconstructed in the current period or in the following or previous period depending on whether the edge occurs in the first or second guard period.

In the case exemplified in Figure 6, a pulse is detected close to the sampling instant; therefore, the bit of the period following the current one is also reconstructed as 1.

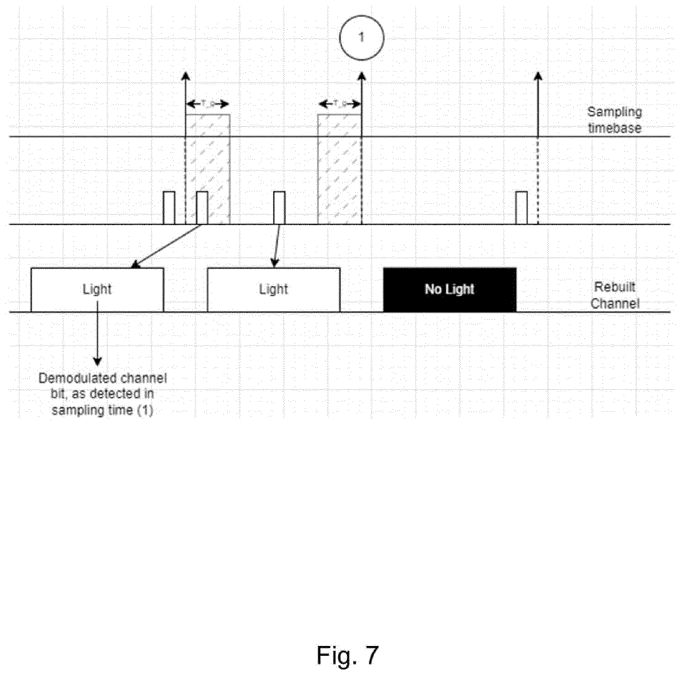

In the case exemplified in Figure 7, at the sampling instant (1) the pulse falls within the first guard period; therefore, the bit preceding the current sampling period is reconstructed as 1.

The bit actually passed to the next OOC decoder is the one relating to 2 periods prior to the current period, since it will no longer be modified by the subsequent sampling instants.

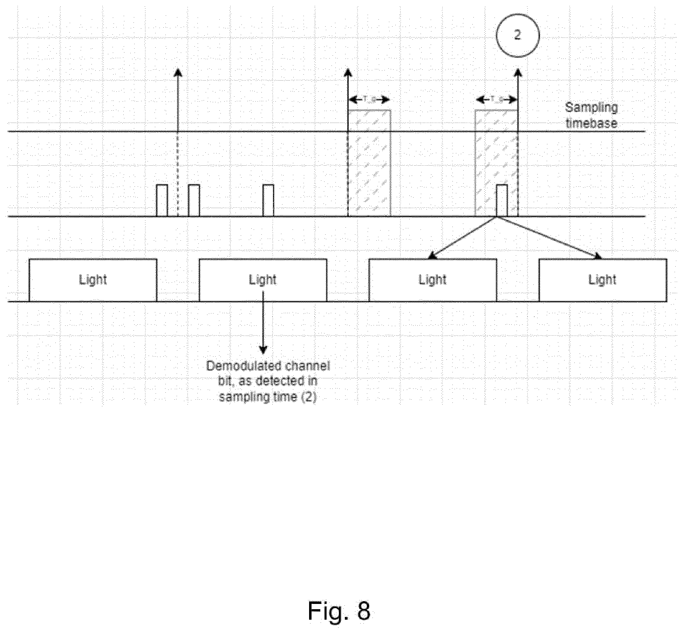

In the case exemplified in Figure 8, similarly to the case exemplified in the accompanying Figure 6, at the sampling instant (2), the bits of the current period and of the next one are reconstructed as 1.

The digital channel reconstruction module described allows compensating the temporal drifts up to a limit which is dictated by the ability to keep the reconstruction of a codeword intact. This translates into the constraint that requires that the drift shall not be so high that, in a period equal to the maximum distance between the first and the last bit set to 1 of a codeword, the aforesaid drift is greater than double the guard time $T_g$.

In the exemplary case in which:

the OOC code comprises 78 bits, in which the maximum distance between the first and the last bit of a codeword is 61 chips;
$T_chip$ = 200 us (5 KHz);
$T_g$ = 40 us.

It is therefore calculated that:

The distance between the first and last bit set to 1 of the codeword: $T_first_last$ = 200*61 us = 12.2ms;
The maximum drift allowed: $T_g$*2 = 80 us each $T_first_last$ = 12.2ms $\rightarrow$ there is a 6.5 per thousand of error on the chip period;
Therefore, the difference between the tx and rx time bases may be a maximum of *33 Hz* on *5Khz.*

If it is admissible that multiple synchronization attempts are made and an adaptive time base synchronization mechanism is active, it is possible to accept that the maximum drift value is not greater than double the guard time $T_c + T_g$, in a period equal to the maximum distance between the first and bit set to 1 of a codeword.

With reference to the previous example:
The maximum drift allowed is equal to: $T_g + T_c$ = 280 us each $T_first_last$ = 12.2ms $\rightarrow$ there is a 2.3% error on the chip period.

The difference between the tx and rx time bases may, therefore, be a maximum of *114 Hz* on *5Khz.*

The bits reconstructed in each chip period by means of the method described above are therefore inserted into a bit vector which is the state of the reconstructed digital channel. Said bit vector, which is called channel window, must have a size at least equal to the size of a codeword, *n*, to allow the decoding module, the OOC decoder, to perform the pseudo-correlation operation explained below.

The decoding module implements the following functions:

the calculation of the pseudo-correlation between the channel window and the OOC code of the receiver;
The identification and management of possible so-called "shadow" codes adjacent to the real code (called "adjacents"), due to time base drift;
The identification, based on the results of the previous actions, of the presence or absence of the optical beam.

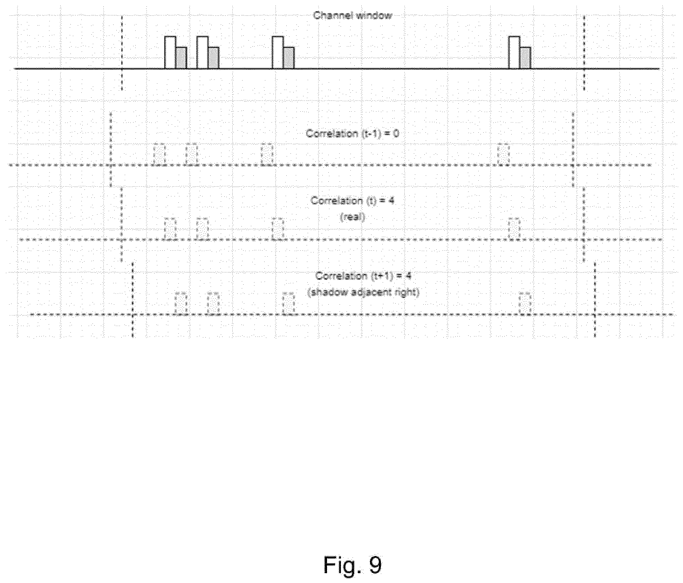

With reference to the accompanying Figure 9, the pseudo-correlation is calculated by limiting it to three values, since the aim is to identify the maximum value it assumes and also the two values adjacent to such maximum value, to understand if there are adjacent shadow codes, resulting from time base drifts or jitters.

When the central value of the correlation reaches the maximum value (equal to the weight w of the codeword), the word is considered temporarily locked.

When the first codeword is locked, to verify whether the latter is actually a codeword transmitted by a single receiver and to distinguish it from any ephemeral codewords resulting from interference, it is checked whether after a period equal to:

$$T_i = T_symb + T_pause_i$$

the maximum correlation reappears again.

If this occurs for a certain number *N* of consecutive times, then the beam is considered synchronized.

Subsequently, it is checked that the codeword always appears at the moment in which it is expected; if this does not occur, then the beam is considered interrupted.

The verification of the adjacent shadow codes is necessary to understand if, when the main synchronism is lost, adjacent shadows are there which are already synchronized, since this would mean that there has been a temporal drift between the time base of the transmitter and of the receiver, to the point of generating a shift of the position of the codeword of one time *T_chip* to the right or to the left of the central position, depending on the direction of the drift. In this case, the synchronization time is moved to the first valid adjacent shadow and the presence of the beam is confirmed.

The identification of an adjacent shadow to the left or to the right gives an indication of the direction of the temporal drift and is an information which may eventually be used in the time base adaptation module.

Finally, the adaptive synchronization module is responsible for adapting the time base of the receiver so that it is as synchronous as possible with that of the transmitter.

The decoding operation described in the previous paragraph generates as a collateral result the indication of the direction of the temporal drift, by identifying the adjacent shadows.

Depending on whether the adjacent shadows appear in the correlation vector to the left or to the right of the main code, it is possible to know whether the time base of the receiver travels faster or slower with respect to that of the transmitter. Consequently, the direction in which to change it so as to best align it with the one of the transmitter is known.

This adaptation module, therefore, is responsible for continuously monitoring and adapting the time base of the receiver with the aim of minimizing the appearance of shadows, since less shadows are there, the less interference will be perceived by the OOC decoder.

## Claims

1. An optoelectronic sensor comprising a plurality of transmitters (10) configured to emit light signals in a predefined monitoring area, at least one receiver (20) configured to receive the light signals emitted by the transmitters (10) of said plurality of transmitters (10), control means for guiding the emission of said light signals and generating an alarm signal in the event of detection, by the at least one receiver (20), of the presence of an object in the monitoring area, wherein said control means are configured to generate light signals by means of modulation of the optical Code Division Multiple Access, or optical CDMA, type.

2. An optoelectronic sensor according to claim 1, wherein said control means comprise a first control device (13) associated with each transmitter (10) of said plurality of transmitters (10) and a second control device (23) associated with said at least one receiver (20).

3. An optoelectronic sensor according to claim 1 or 2, wherein the codes used for said optical Code Division Multiple Access, or optical CDMA, modulation, are orthogonal optical codes, OOC.

4. An optoelectronic sensor according to claim 3, wherein said orthogonal optical codes, OOCs, are based on a codeword comprising a number *n* of bits and are such as to achieve a minimum autocorrelation for each shifted version of said codeword and a maximum autocorrelation only for said codeword.

5. An optoelectronic sensor according to one or more of claims 3 to 4 wherein said orthogonal optical codes, OOCs, are constructed by means of algebraic methods.

6. An optoelectronic sensor according to the preceding claim, wherein said orthogonal optical codes, OOCs, are constructed by means of the Difference Set algebraic method or the Projective Geometry algebraic method.

7. An optoelectronic sensor according to one or more of the preceding claims, wherein each transmitter (10) of said plurality of transmitters comprises a first power supply module (11), a transmission module (12) and a first control device (13), associated with a first codeword selection module (14), and configured to guide the transmission module (12) to emit a sequence, selectable by means of the codeword selection module (14), of light signals in the monitoring area, and wherein said at least one receiver (20) comprises a second power supply module (21), a reception module (22) and a second control device (23), associated with a second codeword selection module (24) and configured to read and process the detections of said reception module (22), to recognize the selected codeword.

**8.** An optoelectronic sensor according to claim 7, wherein said second control device (23) comprises a digital channel reconstruction module adapted to carry out the digital reconstruction of the sequence of bits sent on the physical channel from the signal received by the reception module (22), a received signal decoding module adapted to implement an OOC decoder to process the sequence of bits of the reconstructed digital channel, manage the decoded symbol and determine the possible absence of detection of the optical beam by said at least one receiver (20), and an adaptive synchronization module adapted to maintain the synchronization of the time base of said at least one receiver (20) with respect to that of the transmitter (10).

**9.** An optoelectronic sensor according to claim 8, wherein said digital channel reconstruction module, said decoding module and said adaptive synchronization module are made by means of the firmware of one or more processors of said control device (23).

**10.** An optoelectronic sensor according to one or more of the preceding claims, wherein the codes used for said optical Code Division Multiple Access modulation are associated with several light transmitters (10) of a photoelectric barrier.

**11.** An optoelectronic sensor according to one or more of the preceding claims, wherein the light signals simultaneously transmitted by the light transmitters (10) in the monitored area are each generated by an output signal modulated with the respective code according to a modulation of the optical Code Division Multiple Access, or optical CDMA, type.

10
10
10
10
10
10
10
10
20
20
20
20
20
20
20
20

Fig. 1

10
12
TX
20
21
22
RX
11
Power
IR
emitter
IR
receiver
Power
13
23
uController
uController
14
24
1
2
3
4
5
6
7
8
Codeword selector
1
2
3
4
5
6
7
8
Codeword selector

Fig. 2

T_pause_i
T_symb
T i

Fig. 3

Chip period = 200us
Rx Pulse period = 2us
tx codeword
tx signal
rx signal

Fig. 4

0
1
2
Sampling timebase
Received signal
No Light
Light
Light
Demodulation result
T_chip

Fig. 5

0
Sampling timebase
Light
Light
Rebuilt Channel

Fig. 6

1
Sampling
timebase
Light
Light
No Light
Rebuilt
Channel
Demodulated channel
bit, as detected in
sampling time (1)

Fig. 7

2
T_o
T_o
Sampling
timebase
Light
Light
Light
Light
Demodulated channel
bit, as detected in
sampling time (2)

Fig. 8

Channel window
Correlation (t-1) = 0
Correlation (t) = 4
(real)
Correlation (t+1) = 4
(shadow adjacent right)

Fig. 9

Codeword representation
[0,1,3,8]
11010000100000000000000000…0000000
Codeword length: 78 bit

Fig. 10

Europäisches Patentamt
European Patent Office
Office européen des brevets

# EUROPEAN SEARCH REPORT

Application Number
EP 24 20 4679

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 103 962 A1 (SICK AG [DE]) 23 September 2009 (2009-09-23) * paragraph [0001] * * paragraph [0029] - paragraph [0034] * * paragraph [0037] - paragraph [0038] * * paragraph [0089] - paragraph [0096] * * figures 1, 13, 14a,b * ----- | 1,3-11 | INV. G01V8/20 |
| X<br>A | EP 2 015 110 A1 (SICK AG [DE]) 14 January 2009 (2009-01-14) * paragraph [0001] * * paragraph [0048] - paragraph [0051] * * paragraph [0044] * * figure 1 * * paragraph [0078] * ----- | 1-3<br>4-11 | |
| X<br>A | US 2010/224762 A1 (HAUSKE MAXIMILIAN [DE] ET AL) 9 September 2010 (2010-09-09) * paragraph [0001] * * paragraph [0040] * * paragraph [0056] - paragraph [0057] * * paragraph [0026] * * paragraph [0070] * * figure 1 * ----- | 1,3<br>2,4-11 | TECHNICAL FIELDS SEARCHED (IPC)<br>G01V<br>G08B |
| X<br>A | US 2009/016735 A1 (SCHMITZ STEPHAN [DE] ET AL) 15 January 2009 (2009-01-15) * paragraph [0001] * * paragraph [0049] * * paragraph [0072] - paragraph [0077] * * paragraph [0107] * * figure 1 * ----- | 1,3<br>4-11 | |

The present search report has been drawn up for all claims

1

| Place of search | Date of completion of the search | Examiner |
|---|---|---|
| The Hague | 21 February 2025 | Hippchen, Sabine |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO.

EP 24 20 4679

This annex lists the patent family members relating to the patent documents cited in the above-mentioned European search report. The members are as contained in the European Patent Office EDP file on
The European Patent Office is in no way liable for these particulars which are merely given for the purpose of information.

21-02-2025

| Patent document cited in search report | Publication date | Patent family member(s) | Publication date |
|---|---|---|---|
| EP 2103962 A1 | 23-09-2009 | AT E521000 T1 | 15-09-2011 |
| | | DE 102008015286 A1 | 01-10-2009 |
| | | EP 2103962 A1 | 23-09-2009 |
| EP 2015110 A1 | 14-01-2009 | NONE | |
| US 2010224762 A1 | 09-09-2010 | AT E520999 T1 | 15-09-2011 |
| | | EP 2226650 A1 | 08-09-2010 |
| | | JP 5636195 B2 | 03-12-2014 |
| | | JP 2010206788 A | 16-09-2010 |
| | | US 2010224762 A1 | 09-09-2010 |
| US 2009016735 A1 | 15-01-2009 | DE 102008009180 A1 | 22-01-2009 |
| | | JP 5273846 B2 | 28-08-2013 |
| | | JP 2009020100 A | 29-01-2009 |
| | | US 2009016735 A1 | 15-01-2009 |

EPO FORM P0459

For more details about this annex : see Official Journal of the European Patent Office, No. 12/82